# EUROPÄISCHE PATENTSCHRIFT

(11) **EP 3 003 003 B1**
(45) Veröffentlichungstag und Bekanntmachung des Hinweises auf die Patenterteilung: **01.04.2020**
(21) Anmeldenummer: 14726125.9
(22) Anmeldetag: 20.05.2014
(51) Int. Cl.: A01C 1/06

(54) **VERFAHREN ZUM HERSTELLUNG VON GRANULIERTEM SAATGUT UND GRANULIERTES SAATGUT**
METHOD FOR PRODUCING GRANULATED SEEDS AND GRANULATED SEEDS
PROCÉDÉ POUR OBTENTION DE SEMENCES ENROBÉES ET SEMENCES ENROBÉES

(30) Priorität: 05.06.2013 DE 102013210408
(43) Veröffentlichungstag der Anmeldung: 13.04.2016
(73) Patentinhaber: Evonik Operations GmbH, 45128 Essen (DE)
(72) Erfinder: SCHEFFLER, Jochen, 63768 Hösbach (DE); LORTZ, Beata Maria, 63607 Wächtersbach (DE); RIEGER, Thomas, 63571 Gelnhausen (DE); ALPMANN, Ludger, 59558 Lippstadt (DE); FEUERSTEIN, Ulf, 27330 Assendorf b. Bruchhausen-Vilsen (DE); DAU, Jörn, 37269 Eschwege (DE)
(74) Vertreter: Evonik Patent Association
(86) Internationale Anmeldenummer: PCT/EP2014/060277
(87) Internationale Veröffentlichungsnummer: WO 2014/195123

(56) Entgegenhaltungen:
- EP-A1- 0 097 459
- EP-A1- 1 935 245
- US-A- 3 950 891
- US-A- 5 876 739
- US-A- 6 156 699

## Beschreibung

Die vorliegende Erfindung betrifft granuliertes Saatgut, welches Samenkörner umfasst, die mit einer Kieselsäure enthaltenen Hüllschicht umhüllt sind. Die Kieselsäure enthaltene Hüllschicht hat feuchtigkeitsregulierende Eigenschaften, wodurch die Keimfähigkeit des Saatguts auch unter besonders trockenen Bedingungen erhalten bleibt. Die vorliegende Erfindung betrifft außerdem ein Verfahren zur Granulierung von Saatgut. Das erfindungsgemäße Verfahren eignet sich insbesondere zur Granulierung von Samenkörnern mit einer Größe von ca. 0,3 bis 10 mm.

Die vorliegende Erfindung betrifft granuliertes Saatgut. Mit diesem Begriff wird im Folgenden Saatgut bezeichnet, dessen Samenkörner mit einer Hüllschicht aus organischem und/oder anorganischem Material umhüllt sind. Granuliertes Saatgut hat gegenüber ungranuliertem Saatgut den Vorteil, dass es aus Partikeln annähernd gleicher Form und Größe besteht und eine relativ gleichmäßige Dichte aufweist. Diese Eigenschaften sind beispielsweise für die maschinelle Aussaat von großem Vorteil:
- es ermöglicht und/oder vereinfacht die Nutzung von Einzelkornsaatverfahren,
- die Menge an benötigtem Saatgut kann optimiert und in der Regel reduziert werden, und
- der Ertrag pro Anbaufläche kann gleichzeitig maximiert werden.

Granuliertes Saatgut enthält in der Regel ein Trägermaterial, das die Saatkörner umhüllt. Durch die Wahl eines geeigneten Trägermaterials kann der Feuchtigkeitsgehalt des Saatguts gesteuert werden. Dies dient einerseits zum Schutz des Saatguts vor Verderben, andererseits kann dadurch das Austrocknen des Saatguts verhindert und somit die Keimfähigkeit erhalten werden. Die Kontrolle des Feuchtigkeitsgehaltes ist darüber hinaus und insbesondere bei der Aussaat unter besonders trockenen Bedingungen von Bedeutung durch Abgabe des in der Kieselsäure enthaltenen Wassers.

Aus der US 6,156,699 ist bekannt, Saatgut, insbesondere Luzernesamen, unter Verwendung von Polyvinylalkohol als Bindemittel, Schichtsilikat als Trägermaterial und Kieselgel als Granulierungshilfsmittel zu granulieren. Die Herstellung des Granulats erfolgt durch Zugabe einer Dispersion von Bindemittel und Trägermaterial zu den Samen, wodurch die Samenkörner von einer Schicht aus Trägermaterial umhüllt werden. Zu diesem Granulat wird in einem zweiten Schritt Kieselgel oder Kieselsäure gegeben, um ein Aneinanderhaften der Granulatkörner zu verhindern.

Die EP 0 013 769 A1 beschreibt ein Verfahren zur Granulierung von Saatgut, beispielsweise von Mais oder von Zuckerrüben, unter Verwendung von Vermiculit als Trägermaterial. Dieses Trägermaterial weist eine hohe Durchlässigkeit für Gase und Flüssigkeiten auf und soll dadurch für das Saatgut gleichmäßig gute Wachstumsbedingungen bei unterschiedlichen biologischen Bedingungen schaffen.

Die EP 0 543 438 A1 beschreibt die Pelletierung von genetischem Material, beispielsweise Pilzsporen unter Verwendung von Polyvinylalkohol als Bindemittel und einer festen Trägersubstanz, beispielsweise Vermiculit.

Die EP 0 380 448 A1 beschreibt die Herstellung von Saatgutpillen, beispielsweise von Grassamen, wobei als Trägermaterial verschiedene organische oder anorganische Stoffe vorgeschlagen werden, beispielsweise Tonerde oder Komposterde. Die Saatgutpillen werden mit Hilfe von Bindemitteln granuliert und können mit Wasserrückhaltemitteln, beispielsweise stärkemodifizierte Polyacrylsäuren, versetzt werden, um den Wasserhaushalt der Saatgutpillen zu regulieren. Zur Granulierung wird gemäß EP 0 380 448 A1 zunächst eine Mischung von Trägermaterial, Bindemittel und Wasserrückhaltemittel hergestellt. Dieses Gemisch wird anschließend zu dem Saatgut verpresst, um ein Granulat herzustellen.

Aus der WO 00/35277 ist die Herstellung von Saatgut mit einer insektiziden Hüllschicht bekannt. Die beschriebene Hüllschicht ist eine Zusammensetzung aus einem Bindemittel, einem Insektizid und einem Füllstoff, wobei als Füllstoff beispielsweise Diatomeenerde eingesetzt wird.

Die EP 0097459 beschreibt ein Verfahren zum Impfen von landwirtschaftlichem Saatgut bzw. Samen mit geeigneten gefriergetrockneten Mikroorganismen durch Aufbringen der gefriergetrockneten Mikroorganismen auf das Saatgut zusammen mit einem Bindemittel und Trocknen des Saatguts.

Aus JP 2003-325006 A ist außerdem die Herstellung von granulierten Reissamen bekannt, wobei die Hüllschicht als Hauptkomponente Cellulose enthält. Die beschriebene Hüllschicht kann zudem als Additiv Kieselgel oder Diatomeenerde enthalten.

Ziel der vorliegenden Erfindung ist es, ein Verfahren zur Herstellung von granuliertem Saatgut bereitzustellen, wobei das granulierte Saatgut eine hohe Keimfähigkeit konserviert. Auch nach mehrmonatiger Lagerung soll die Keimfähigkeit des granulierten Saatguts bereits drei Tage nach dem Bewässern weitgehend der ursprünglichen Keimfähigkeit vor der Granulierung entsprechen. Durch die Wahl eines geeigneten Trägermaterials sollen phytotoxische Effekte auf den Samen vermieden werden und die Keimfähigkeit und Feldaufgangsrate insbesondere unter trockenen Anbaubedingungen stabilisiert und gesteigert werden. Das erzeugte Saatgutgranulat soll eine hohe Härte und Abriebfestigkeit aufweisen, um die Lager- und Transportfähigkeit zu gewährleisten und zu verbessern. Ein weiteres Ziel der vorliegenden Erfindung ist es, granuliertes Saatgut bereitzustellen, das vorzugsweise durch das genannte Verfahren herstellbar ist und die oben beschriebenen Eigenschaften aufweist. Insbesondere soll das Verfahren die Granulierung von Samenkörnern mit einer Größe von ca. 0,3 bis 10 mm ermöglichen.

Dieses Ziel wird durch ein Verfahren zur Herstellung von granuliertem Saatgut, also beschichteten Samenkörnern, umfassend mit einer Hüllschicht beschichtete Samenkörner erreicht, wobei das Verfahren die folgenden Schritte umfasst:
a) Bereitstellen von Samenkörnern,
b) Aufbringen eines Bindemittels auf die Samenkörner unter Erhalt von mit Bindemittel beschichteten Samenkörnern,
c) Aufbringen einer Hüllmasse umfassend Kieselsäure auf die mit Bindemittel beschichteten Samenkörner unter Erhalt von mit einer Hüllschicht beschichteten Samenkörnern, wobei die Kieselsäure eine gefällte oder pyrogene Kieselsäure ist und eine BET-Oberfläche gemäß ISO 9277 von 20 bis 400 m²/g und eine Partikelgröße d50 gemäß ISO 13302-1 von 5 bis 130 µm und ein Porenmaximum gemäß DIN 66134 von 30 bis 60 nm aufweist und der oder den aufzubringenden Hüllmassen so viel Kieselsäure zugesetzt werden, dass die Hüllschicht 10 bis 70 Gewichts-% Kieselsäure umfasst.
d) optional, Trocknen der mit Bindemittel und Hüllmasse beschichteten Samenkörner.

Die erfindungsgemäß einzusetzende Hüllmasse ist eine Mischung, in der die Kieselsäure vorzugsweise gleichmäßig verteilt ist. Bevorzugt ist die Hüllmasse eine Feststoffmischung.

Die Kieselsäure wird in einer geeigneten Menge eingesetzt, so dass die Hüllschicht besonders bevorzugt mehr als 15 und weniger als 50 Gewichts-%, am meisten bevorzugt 20 bis 45 Gewichts-% Kieselsäure enthält bezogen auf das Gesamtgewicht der Hüllschicht.

Kieselsäure im Sinne dieser Erfindung ist Polykieselsäure, welche in Form von untereinander unvernetzten, an ihrer Oberfläche hydroxylierten Einzelpartikeln vorliegt. Polykieselsäure sind bekanntermaßen Kondensationsprodukte der Monokieselsäure Si(OH)₄.

Kieselgur oder Diatomeenerde wird im Gegensatz zu Kieselsäure nicht benötigt und ist bevorzugt in der Hüllschicht nicht enthalten, auch nicht als Füllstoff oder dergleichen.

Vorzugsweise weist die Kieselsäure eine BET-Oberfläche gemäß ISO 9277 von 50 bis 300 m²/g auf.

Vorzugsweise weist die Kieselsäure eine Partikelgröße d50 gemäß ISO 13320-1 10 bis 120 µm, und besonders bevorzugt von 15 bis 110 µm auf.

Vorzugsweise weist die Kieselsäure ein Maximum in der Porengrößenverteilung (Porenmaxium) gemäß DIN 66134 bei einer Porengröße von 35 bis 50 nm auf. Erfindungsgemäße Kieselsäuren sind beispielsweise unter den Handelsnamen SIPERNAT® und AEROPERL® erhältlich.

Das erfindungsgemäße Verfahren gewährleistet eine gleichmäßige Verteilung der Kieselsäure in der Hüllmasse und erlaubt die Herstellung von granuliertem Saatgut mit einem hohen Anteil an Kieselsäure in der Hüllmasse, wobei sowohl die gleichmäßige Verteilung als auch der hohe Anteil der Kieselsäure der Regulierung der Samenfeuchte während Lagerung und Transport und der Versorgung des Samens mit Feuchtigkeit nach Aussaat förderlich sind.

Das Bindemittel wird bevorzugt in flüssiger Form aufgetragen, zum Beispiel entweder in Form eines an sich flüssigen Bindemittels oder in Form einer flüssigen Zusammensetzung enthaltend ein Bindemittel. Die flüssige Zusammensetzung enthaltend ein Bindemittel kann zum Beispiel eine Lösung eines an sich festen Bindemittels in einem Lösungsmittel sein. Auch eine Zusammensetzung eines an sich flüssigen Bindemittels in einem Lösungsmittel kann verwendet werden. Es ist auch möglich, dass das Bindemittel in Pulverform der Hüllmasse beigemischt wird und Wasser ohne weitere Zusätze als Flüssigkomponente verwendet wird. Letztere Variante kann die oben beschriebenen Schritte b) und c) ersetzen. Ein solcher Schritt bc) wäre dann: Aufbringen einer Hüllmasse umfassend Kieselsäure, Bindemittel, und gegebenenfalls Wasser, auf die bereitgestellten Samenkörner unter Erhalt von mit einer Hüllschicht beschichteten Samenkörnern.

Durch die getrennte Zugabe des bevorzugt flüssigen Bindemittels bzw. der flüssigen Zusammensetzung enthaltend ein Bindemittel einerseits und der Hüllmasse andererseits wird erreicht, dass der Samen zunächst möglichst gleichmäßig und vollflächig von Bindemittel benetzt wird, bevor die Hüllmasse zugegeben wird. Dabei werden die Samenkörner im Wesentlichen einzeln vollständig beschichtet, so dass im Wesentlichen jedes Korn des granulierten Saatguts ein einziges Samenkorn enthält. Die flüssige Bindemittelzusammensetzung hat zudem den Vorteil, dass sie gleichmäßig durch Sprühen aufgetragen werden kann.

Das flüssige Bindemittel kann beispielsweise eine Lösung, Emulsion, Suspension, Aufschlämmung oder ein Slurry sein. Bevorzugt ist das Bindemittel bzw. die Bindemittelzusammensetzung ein an sich flüssiges Bindemittel, eine einphasige Lösung eines Bindemittels oder eine mehrphasige flüssige Mischung enthaltend ein flüssiges Bindemittel, die keine festphasigen Bestandteile aufweist. Eine Bindemittelzusammensetzung enthält typischerweise das Bindemittel und ein Lösungsmittel, wie beispielsweise Wasser. Im Falle einer Bindemittelzusammensetzung beträgt die Konzentration des Bindemittels in der Zusammensetzung bevorzugt 0,1 bis 10 Gewichts-%, besonders bevorzugt 3 bis 6 Gewichts-% bezogen auf die Masse der Zusammensetzung.

Als Bindemittel eignen sich bevorzugt wasserlösliche oder wasserdispergierbare Polymere oder Mischungen solcher Polymere. Das Bindemittel sollte im Boden chemisch oder biologisch abbaubar sein, um eine Keimung zu ermöglichen. Geeignete Polymere sind beispielsweise Polyvinylalkohol, Polycarboxylate, Polyacrylsäure, Polysaccharide, Cellulose, Cellulosederivate, Carboxymethylcellulose, Acryldispersionen, Polymethylacrylate, Polyvinylacetat, Polyethylenoxid, Alkylacrylate, Gelatine, Stärke, Alginate, Casein, Melasse, Pektin oder beliebige Mischungen daraus.

Besonders bevorzugt umfasst das Bindemittel Polyvinylalkohol, da sich gezeigt hat dass die Verwendung von Polyvinylalkohol als Bindemittel die Härte und Abriebfestigkeit des Saatgutgranulats positiv beeinflusst, insbesondere im Falle von Rapssamen.

Das Verfahren wird bevorzugt in einem rotierenden, pfannenförmigen Behälter durchgeführt. Bevorzugt ist der Behälter geneigt, besonders bevorzugt in einem 45° Winkel. Die Rotationsgeschwindigkeit des Behälters beträgt bevorzugt 200 bis 400 U/min.

Das Mischen von Samen mit dem Bindemittel geschieht bevorzugt so, dass zunächst der Samen im Behälter vorgelegt und anschließend mit dem flüssigen Bindemittel bzw. der flüssigen Zusammensetzung enthaltend ein Bindemittel besprüht wird. Dabei bildet sich unter Rotation des Behälters eine Mischung von aneinanderhaftenden Samenkörnern. Anschließend wird unter Rotation des Behälters die Hüllmasse zugegeben, wobei sich das gewünschte Granulat bildet.

Die Schrittfolge b) und/oder c) kann optional beliebig oft wiederholt werden, wobei sich die Zusammensetzung des Bindemittels und/oder der Hüllmasse jeweils von der in den vorhergehenden Schritten verwendeten Zusammensetzung unterscheiden kann. Dadurch kann granuliertes Saatgut mit einer dickeren Hüllschicht hergestellt werden. Dabei bezeichnet der Begriff Hüllschicht immer die gesamte Hüllschicht umfassend Bindemittel und Hüllmassen.

Bezogen auf das Gewicht der bereitgestellten Samenkörner werden bevorzugt soviel flüssiges Bindemittel oder flüssige Zusammensetzung enthaltend ein Bindemittel und Hüllmasse zugegeben, dass das Gewicht des granulierten Saatgutes 150 bis 1000%, bevorzugt 200 bis 500%, beträgt. Die Menge an Bindemittel (Flüssigkomponente) wird vor allem dadurch bestimmt, wie viel und wie schnell die Hüllmasse Flüssigkeiten aufnimmt. Das Verhältnis Hüllmasse zu Bindemittel kann etwa im Bereich von 1:0,5 bis 1:2 liegen.

In der Praxis wird man unterscheiden müssen, ob durch das Granulieren ein bestimmtes Kaliber erzielt werden soll oder ob eine definierte Gewichtssteigerung erzielt werden soll, wie es z.B. beim Pillieren von Grassamen marktüblich ist. In erstem Fall hängt das Mengen-Verhältnis Saatgut zu Hüllmasse von dem gewünschten Ziel-Kaliber ab und die Gewichtssteigerung kann abhängig von der Saatgutart bis zu 1000% betragen. Im Fall einer kaliberunabängigen Gewichtssteigerungen hängt die zu erzielende Gewichtszunahme von Faktoren wie Kundenwunsch, Marktgegebenheiten und der Saatgutart ab.

In einer weiteren Ausführungsform können mit der Hüllmasse hygroskopische Salze in einer Menge zugesetzt werden, so dass die Hüllschicht 0,1 bis 15 Gewichts-%, bevorzugt 0,2 bis 10 Gewichts-%, besonders bevorzugt 0,3 bis 7 Gewichts-% hygroskopische Salze umfasst.

Durch das hygroskopische Salz kann die Fähigkeit der Hüllschicht zur Speicherung von Feuchtigkeit zusätzlich positiv beeinflusst werden. Geeignete hygroskopische Salze sind beispielsweise Magnesiumchlorid, Magnesiumnitrat, Magnesiumsulfat, Ammoniumnitrat, Ammoniumchlorid, Ammoniumsulfat, Kaliumchlorid, Zinksulfat, Kaliumnitrat, Ammoniumdihydrogensulfat, Natriumdihydrogensulfat, Kaliumsulfat, Natriumnitrat, Calciumchlorid, oder beliebige Mischungen daraus. Besonders bevorzugt sind Magnesiumchlorid, Magnesiumnitrat, Magnesiumsulfat oder beliebige Mischungen daraus.

In einer weiteren Ausführungsform können der Hüllmasse zusätzlich geeignete organische und/oder anorganische Füllstoffe zugesetzt werden, beispielsweise Polysaccharide wie Cellulose oder Hemicellulose, Holzfasern, Lignin, Holzkohle, Torfmehl, Holzmehl, Gips, Glimmer, Sand, Bentonit, natürliche Silikate oder beliebige Mischungen daraus. Die zusätzlichen Füllstoffe tragen zur Härtung und damit zur mechanischen Stabilität des Granulats bei.

Zur weiteren Beeinflussung der Feuchtigkeitsaufnahme kann wenigstens einer der aufzubringenden Hüllmassen ein oder mehrere Quellmittel in einer Menge zugesetzt werden, dass die Hüllschicht 0,1 bis 25 Gewichts-%, besonders bevorzugt 1 bis 5 Gewichts-% eines Quellmittels enthält.

Geeignete Quellmittel sind beispielsweise Schichtsilikate. Geeignete Schichtsilikate sind beispielsweise, Tonminerale, Talk, Serpentin, Vermiculit, Bentonit, Muskovit, Kaolinit, oder beliebige Mischungen davon. Die Hüllschicht kann 0,1 bis 25 Gewichts-%, bevorzugt 1 bis 5 Gewichts-% eines Quellmittels umfassen. Besonders bevorzugt umfasst die Hüllschicht Natriumbentonit, insbesondere im Falle von granuliertem Rapssamen. Es hat sich nämlich gezeigt, dass die Zugabe von Natriumbetonit die Keimfähigkeit von granuliertem Rapssamens positiv beeinflusst.

Der Hüllmasse können ferner Fungizide, Insektizide, Biozide, Pflanzenstärkungsmittel, Nährstoff, oder Phytohormone zugesetzt werden. Diese Stoffe können in flüssiger oder fester Form der Hüllmasse beigefügt werden. Diese Stoffe können der Hüllmasse zudem erst während des Granulierungsvorgangs beigefügt werden. Diese Stoffe schützen den Samen vor dem Befall mit Schädlingen, fördern die Keimung und Feldaufgang bzw. tragen zur Versorgung des Samens mit Nährstoffen bei.

Das erfindungsgemäße Verfahren eignet sich bevorzugt zur Granulierung von Samen von Nutzpflanzen. Geeignete Samenarten sind beispielsweise Samen von Blattgemüsesorten wie z. B. Gartensalat (*Lactuca sativa* L.), Chicoree (*Cichorium intybus var foliosum*), Endivie (*Cichorium endivia* L.), Rucola (*Diplotaxis tenuifolia*), Mangold (*Beta vulgaris*), Spinat (*Spinacia oleracea* L.); Samen von Kreuzblütlergewächsen wie z. B. Kohlsorten (*Brassica* sp.), Raps (*Brassica napus*), Rübsen (*Brassica rapa L.*), Ölrettich (*Raphanus sativus*), Radieschen (*Raphanus sativus* L.), Senf (*Sinapis alba*), Lein (*Linum usitassimum* Linacaceae), Leindotter (*Camelina sativa*); Samen von Kürbisgewächsen wie z. B. Gurken (*Cucumis* L.), Kürbisse oder Zucchini (*Curcubita*), Tomate (*Solanum lycopersicum*), Aubergine (*Solanum melongena*), Avocado (*Persea americana* Mill.); Samen von Wurzelgemüsearten wie z. B. gelbe Rübe (*Daucus carota* L.), rote Rübe (*Beta vulgaris subsp. vulgaris*), Zuckerübe (*Beta vulgaris subsp. vulgaris*, Altissima Gruppe), Meerettich (*Aromoracia rusticana*); Samen von Lauchgewächsen (*Allium sp.*) wie z. B. Zwiebel (*Allium cepa* L.), Poree (*Allium porrum* L.), Knoblauch (*Allium sativum* L.); Samen von Hülsenfrüchten wie z. B. Erbsen (*Pisum sativum* L.), Wicken (*Vicia sativa* L.), Linsen (*Lens*), Sojabohnen (*Glycine max* (L.) Merr.); Samen von Hülsenfrüchtlern wie z. B. Weißklee (*Trifolium repens L.*), Rotklee (*Trifolium pratensis L.*), Alexandrinerklee (*Trifolium alexandrinum L.*), Inkarnatklee (*Trifolium incarnatum L*), Perserklee (*Trifolium resupinatum*) Hornklee (*Lotus corniculatus*) und Luzerne (*Medicago sativa*); Gräser (*Cyperaceae, Poaceae*); Samen von Zwischenfrüchten wie z. B. Phacelia (*Phacelia tanacetifolia*); Samen von Getreidesorten wie z. B. Weizen (*Triticum aestivum L.*), Roggen (*Secale cereale* L.), Gerste (*Hordeum sp.*), Hafer (*Avena sativa*), Reis (*Oryza*), Mais (*Zea mays*), Hirse (*Sorghum sp., Panicum sp, Pennisetum sp.*); Samen von Zierpflanzen wie z. B. Tagetes sp., Begonien (*Begonia*), Lobelien (*Lobelia*), Pelargonien (*Pelargonium*), Fuchsien (*Fuchsia Cultivars*), Petunien (*Petunia* sp.), Nelken (*Dianthus* sp.), Fächerblumer (*Scaevola aemula*), Sonnenblume (*Helianthus sp.*); und Samen von Tabak (*Nicotiana tabacum*).

Besonders bevorzugt werden Samen von Kreuzblütlergewächsen verwendet, am meisten bevorzugt Raps- und/oder Senfsamen.

Bevorzugt werden Samenkörner mit einer Korngröße von 0,3 bis 10 mm verwendet. Die Samenkorngröße kann beispielsweise durch Sieben bestimmt werden. Für ausgesuchte Samenarten wird die Samenkorngröße als Bereichsangabe und die mittlere Samenkorngröße wie folgt definiert. Die angegebenen Werte sind dem Handbuch Saatgutaufbereitung (M. Kruse, Handbuch Saatgutaufbereitung, 2008, Agrimedia GmbH, Seiten 12 ff.) entnommen.

| Samenart | Samenkorngröße (mm) | mittlere Samenkorngröße (mm) |
|---|---|---|
| Weichweizen | 2,4-3,2 | 2,8 |
| Hartweizen | 2,0-3,2 | 2,6 |
| Spelzweizen | 2,5-3,0 | 2,75 |
| Gerste | 1,9-2,5 | 2,2 |
| Roggen | 2,1-2,8 | 2,45 |
| Hafer | 2,0-3,5 | 2,75 |
| Triticale | 2,5-3,0 | 2,75 |
| Mais | 4,0-7,0 | 5,5 |
| Erbse | 5,5-9,0 | 7,25 |
| Ackerbohne | 6,2-7,7 | 6,95 |
| Weiße Lupine | 5,5-9,3 | 7,4 |
| Gelbe Lupine | 2,5-4,5 | 3,5 |
| Blaue Lupine | 4,2-5,9 | 5,05 |
| Raps | 1,6-2,3 | 1,95 |
| Sonnenblume | 3,0-5,0 | 4,0 |
| Lein | 0,8-1,4 | 1,1 |
| Weidelgräser | 0,5-0,9 | 0,7 |
| Wiesenschwingel | 0,5-0,8 | 0,65 |
| Rotschwingel | 0,3-0,7 | 0,5 |
| Lieschgras | 0,6-0,9 | 0,75 |
| Rotklee | 1,0-1,3 | 1,15 |
| Weißklee | 0,7-0,8 | 0,75 |
| Luzerne | 0,8-1,0 | 0,9 |
| Möhre | 0,8-1,0 | 0,9 |
| Zwiebel | 1,2-2,0 | 1,6 |
| Kohlarten | 1,2-2,5 | 1,85 |
| Petersilie | 1,0-1,5 | 1,25 |
| Salat | 0,4 -0,6 | 0,5 |

Bevorzugt werden die mit Bindemittel und Hüllmasse beschichteten Samenkörner im Anschluss an Schritt c) getrocknet. Das Trocknen des granulierten Saatguts erfolgt bevorzugt bei gegenüber Raumtemperatur erhöhter jedoch nicht zu hoher Temperatur. Vorzugsweise erfolgt die Trocknung bei einer Temperatur im Bereich von 25 bis 50°C, besonders im Bereich von 35 bis 45°C, am meisten bevorzugt im Bereich von 35 bis 40°C. Im Falle von Rapssamen hat sich beispielsweise gezeigt, dass bei einer Trocknungstemperatur im Bereich von 25 bis 40°C die Keimfähigkeit des granulierten Saatguts am besten erhalten bleibt.

In einer bevorzugten Ausführungsform des Verfahrens werden die in Schritt c) erhaltenen umhüllten Saatkörner unterschiedlicher Korngröße vor dem Trocknen nach Korngrößenbereichen getrennt. Dies geschieht bevorzugt durch Sieben, wobei bevorzugt zwei Siebe mit unterschiedlicher Maschenweite verwendet werden, um einen bestimmten Korngrößenbereich auszuwählen. Die Fraktion mit einer geringeren als der erwünschten Korngröße kann wieder der Mischung in Schritt a) zugeführt werden, um erneut mit Bindemittelzusammensetzung und Hüllmasse versetzt zu werden und die Korngröße zu erhöhen.

Besonders bevorzugt wird die Mischung der umhüllten Saatkörner so getrennt, dass umhüllte Saatkörner erhalten werden, die einen engen Korngrößenbereich aufweisen, der etwa Korngrößen in einem Bereich vom 1,25-fachen bis zum 5-fachen, bevorzugt vom 1,5-fachen bis zum 2,5-fachen der mittleren Samenkorngröße umfasst. Im Falle von granuliertem Rapssamen ist der bevorzugte Korngrößenbereich 2,0 bis 3,6 mm, besonders bevorzugt ist der Bereich 2,0 bis 3,0 mm.

Die Verwendung von Kieselsäure als Bestandteil der Hüllschicht von granuliertem Saatgut dient zur Verbesserung der Keimfähigkeit des Saatguts. Dabei wird die bereits beschriebene Kieselsäure eingesetzt. Besonders geeignet hat sich dabei die Verwendung von Kieselsäure zur Verbesserung der Keimfähigkeit von granuliertem Rapssamen erwiesen.

Die gefällte oder pyrogene Kieselsäure hat eine BET-Oberfläche gemäß ISO 9277 von 20 bis 400 m²/g, bevorzugt 50 bis 300 m²/g, und eine Partikelgröße d50 gemäß ISO 13320-1 von 5 bis 130 µm, bevorzugt 10 bis 120 µm, besonders bevorzugt 15 bis 110 µm, und ein Porenmaximum gemäß DIN 66134 von 30 bis 60 nm, bevorzugt 35 bis 50 nm.

Die Kieselsäure wird in einer Menge eingesetzt, dass ihr Anteil am Gesamtgewicht der Hüllschicht 10 bis 70 Gewichts-% beträgt, bevorzugt mehr als 15 und weniger als 50 Gewichts-%, am meisten bevorzugt 20 bis 45 Gewichts-%.

Im Sinne der vorliegenden Erfindung wird eine Stabilisierung und Verbesserung der Keimfähigkeit anhand einer stabilisierten und gesteigerten Keimfähigkeit von granuliertem Saatgut, welches Kieselsäure in der Hüllschicht enthält, im Vergleich zu einem granulierten Saatgut festgestellt, welches keine Kieselsäure in der Hüllschicht enthält aber sonst eine gleichartig zusammengesetzte Hüllschicht aufweist.

Die vorliegende Erfindung betrifft ferner granuliertes Saatgut, welches mit einer Hüllschicht beschichtete Samenkörner umfasst und dadurch gekennzeichnet ist, dass die Hüllschicht Kieselsäure umfasst und die Kieselsäure innerhalb der ganzen Hüllschicht verteilt ist, wobei die Kieselsäure eine gefällte oder pyrogene Kieselsäure ist und eine BET-Oberfläche gemäß ISO 9277 von 20 bis 400 m²/g und eine Partikelgröße d50 gemäß ISO 13302-1 von 5 bis 130 µm und ein Porenmaximum gemäß DIN 66134 von 30 bis 60 nm aufweist und die Hüllschicht 10 bis 70 Gewichts-% Kieselsäure umfasst.

Bei der Kieselsäure handelt es sich um eine oben beschriebene Kieselsäure.

Als innerhalb der ganzen Hüllschicht verteilt gilt die Kieselsäure, wenn sie nicht nur in einem begrenzten Bereich der Hüllschicht, beispielsweise auf der Oberfläche der Hüllschicht, konzentriert ist, sondern wenn die Kieselsäure über die gesamte Dicke der Hüllschicht verteilt aufzufinden ist.

Vorzugsweise ist die Kieselsäure gleichmäßig innerhalb der ganzen Hüllschicht verteilt. In einer besonders bevorzugten Ausführungsform gilt die Kieselsäure als gleichmäßig verteilt, wenn die Differenz zwischen der Kieselsäurekonzentration im inneren Teil der Hüllschicht und der Kieselsäurekonzentration im äußeren Teil der Hüllschicht nicht mehr als 50 Gewichts-%, bevorzugt nicht mehr als 35 Gewichts-%, besonders bevorzugt nicht mehr als 15 Gewichts-% beträgt. Dabei ergeben sich innerer und äußerer Teil der Hüllschicht aus der Unterteilung der Hüllschicht in zwei gleich dicke Schalen. Der innere Teil der Hüllschicht wird durch die direkt am Samenkorn liegende und dieses umschließende Schale gebildet. Der äußere Teil besteht aus der die innere Schale umschließenden, außen liegenden Schale.

Die vorliegende Erfindung betrifft insbesondere granuliertes Saatgut, zu dessen Herstellung eine oben beschriebene Kieselsäure eingesetzt wird.

Besonders bevorzugt wird das erfindungsgemäße Saatgut durch das oben beschriebene, erfindungsgemäße Verfahren hergestellt.

Die Hüllschicht enthält bevorzugt mehr als 15 und weniger als 50 Gewichts-%, am meisten bevorzugt 20 bis 45 Gewichts-%, Kieselsäure, bezogen auf die Masse der Hüllschicht.

Durch die Verwendung von erfindungsgemäßer Kieselsäure und die Tatsache, dass die Kieselsäure innerhalb der ganzen Hüllschicht verteilt ist, wird erreicht, dass das granulierte Saatgut Feuchtigkeit besser speichert. Hierdurch wird die Keimfähigkeit des Saatguts auch unter trockenen Bedingungen gewährleistet. Die Kieselsäure dient also erfindungsgemäß nicht als Vereinzelungsmittel, welches die Granulierung von beschichteten Samen erleichtert, sondern als Mittel zur Feuchtigkeitsregulation und als Füllstoff. Zusätzlich dient die Kieselsäure zur Stabilisierung und Steigerung der Keimfähigkeit gegenüber granuliertem Saatgut, welches keine Kieselsäure in der Hüllschicht enthält.

Kieselgur oder Diatomeenerde wird in dem erfindungsgemäßen Saatgut nicht benötigt. Kieselgur oder Diatomeenerde kann im Saatgut anhand seiner Morphologie nachgewiesen und von der erfindungsgemäß verwendeten, üblicherweise technisch gewonnenen Kieselsäure unterschieden werden.

Vorzugsweise sind die Samenkörner im Wesentlichen einzeln vollständig beschichtet, so dass im Wesentlichen jedes Korn des granulierten Saatguts ein einziges Samenkorn enthält.

Die Hüllschicht umfasst in der Regel ein Bindemittel, bevorzugt eines der genannten Bindemittel.

Die Hüllschicht kann zusätzlich ein hygroskopisches Salz umfassen, bevorzugt eines der genannten hygroskopischen Salze.

Die Hüllschicht kann zusätzlich organische und/oder anorganische Füllstoffe umfassen, bevorzugt einen der genannten Füllstoffe.

Zur weiteren Beeinflussung der Feuchtigkeitsaufnahme kann die Hüllschicht außerdem Quellmittel umfassen, bevorzugt eines der genannten Quellmittel.

Des Weiteren kann die Hüllschicht Fungizide, Insektizide, Biozide, Pflanzenstärkungsmittel, Nährstoff, oder Phytohormone umfassen.

Das Saatgut ist bevorzugt aus den genannten Samenarten ausgewählt.

Das granulierte Saatgut kann unterschiedliche Korngrößenbereiche (Kaliber) aufweisen. Besonders bevorzugt weist das granulierte Saatgut einen engen Korngrößenbereich auf, der Korngrößen im Bereich vom 1,25-fachen bis zum 5-fachen, bevorzugt vom 1,5-fachen bis zum 2,5-fachen der mittleren Samenkorngröße umfasst. Im Falle von Rapssamen beträgt die Korngröße des granulierten Saatguts bevorzugt 2,0 bis 3,6 mm, besonders bevorzugt ist der Bereich 2,0 bis 3,0 mm.

Das erfindungsgemäße Saatgut weist vorzugsweise eine Granulathärte von wenigstens 1,4 kg, bevorzugt wenigsten 1,5 kg, besonders bevorzugt wenigstens 1,8 kg auf.

Es hat sich gezeigt, dass das erfindungsgemäße Saatgut eine ausgezeichnete Lagerfähigkeit aufweist und im Gegensatz von ungranuliertem Samen auch nach Lagerung von über einem Jahr über eine ausgezeichnete Keimfähigkeit verfügt. Die Wurzeldichte der Pflanzen ist bei Verwendung von erfindungsgemäßem granuliertem Saatgut im Vergleich zu ungranuliertem Samen erhöht. Ebenso führt die Verwendung von erfindungsgemäßem granuliertem Saatgut zu einem erhöhten Ernteertrag, wobei im Vergleich zu ungranuliertem Samen eine geringere Aussaatmenge benötigt wird.
Abbildung 1 zeigt eine elektronenmikroskopische Materialkontrast-Aufnahme eines Samens nach Beispiel 1.
Abbildung 2 zeigt die durch EDX ermittelte Verteilung von Silicium in dem in Abbildung 1 gezeigten Samen.
Abbildung 3 zeigt eine elektronenmikroskopische Materialkontrast-Aufnahme eines Samens nach Beispiel 7.
Abbildung 4 zeigt die durch EDX ermittelte Verteilung von Silicium in dem in Abbildung 3 gezeigten Samen.
Abbildung 5 zeigt die REM/EDX-Aufnahme von Beispiel 1 in der die Hüllschicht in zwei Hüllschichtflächen unterteilt ist.

### Beispiele

Die in den folgenden Beispielen eingesetzten Kieselsäuren zeigen die physikalischchemischen Eigenschaften gemäß Tabelle 1.

**Tabelle 1: Physikalisch-chemische Eigenschaften der eingesetzten Kieselsäuren.**

| Produkt | BET-Oberfläche [m²/g] | Partikelgröße d50^{[*]} [µm] | Porenmaximum [nm] |
|---|---|---|---|
| SIPERNAT® 22 | 190 | 110 | 43 |
| SIPERNAT® 350 | 50 | 40 | 50 |
| SIPERNAT® 360 | 50 | 18 | 48 |
| AEROPERL® 300/30 | 300 | 33 | 37,5 |

| | | | |
|---|---|---|---|
| * gemäß ISO 13320-1 | | | |

### Beispiel 1

Zur Herstellung von granuliertem Rapssamen werden 300 g Rapssamen in einem Granulator (ERWEKA, Deutschland - bestehend aus der Antriebseinheit AR403, der Universalkupplung UG und dem Pelletierteller GTE, 300 mm Durchmesser) vorgelegt. Der Granulator besteht aus einer im 45°C Winkel angeordneten Drehpfanne mit einem Durchmesser von 30 cm und einer Drehgeschwindigkeit von 40 rpm. Der Samen wird mit Bindemittel mit Hilfe einer Düse besprüht, bis eine sichtbare Agglomeration von Samenkörnern auftritt. Als Bindemittel wird eine wässrige Lösung enthaltend 5 Gewichts-% Mowiol 28-99 eingesetzt. Große Agglomerate werden vorsichtig von Hand zerdrückt. Daraufhin wird Hüllmasse zugegeben. Als Hüllmasse wird eine Mischung enthaltend 30 Gewichts-% SIPERNAT® 22 und 70 Gewichts-% einer Basishüllmasse eingesetzt. Als Basishüllmasse wird eine Mischung aus 70% Lignocel® (Cellulose, Lignin, Hemicellulose) und 30 % Edasil®-Bentonit eingesetzt. Anschließend wird erneut Bindemittel aufgesprüht und Hüllmasse zugegeben. Insgesamt werden 400 g Bindemittel und 200 g Hüllmasse zugegeben. Die sich bildenden umhüllten Saatkörner werden über ein Sieb mit einer Maschenweite von 3,35 mm und einem weiteren Sieb mit 2,8 mm fraktioniert. Die feinkörnige Fraktion wird wieder in den Granulator zurückgegeben. Die Fraktion zwischen 2,8 mm und 3,35 mm bildet das erwünschte Produkt und wird in einem Trockenschrank bei einer Temperatur von 40°C getrocknet. Der Feuchtigkeitsgehalt des getrockneten Saatguts wird gemäß ISO 787-2 bestimmt und beträgt < 8 %.

### Beispiel 2

Granuliertes Saatgut wird entsprechend Beispiel 1 hergestellt, wobei die Hüllmasse 70 Gewichts-% SIPERNAT® 22 enthält. Insgesamt werden 500 g Bindemittel und 200 g Hüllmasse eingesetzt.

### Beispiel 3

Granuliertes Saatgut wird entsprechend Beispiel 1 hergestellt, wobei die Hüllmasse 30 Gewichts-% SIPERNAT® 350 enthält. Insgesamt werden 363 g Bindemittel und 242 g Hüllmasse eingesetzt.

### Beispiel 4

Granuliertes Saatgut wird entsprechend Beispiel 1 hergestellt, wobei die Hüllmasse 30 Gewichts-% SIPERNAT® 360 enthält. Insgesamt werden 327 g Bindemittel und 200 g Hüllmasse eingesetzt.

### Beispiel 5

Granuliertes Saatgut wird entsprechend Beispiel 1 hergestellt, wobei die Hüllmasse 70 Gewichts-% AEROPERL® 300/30 enthält. Insgesamt werden 502 g Bindemittel und 237 g Hüllmasse eingesetzt.

### Beispiel 6 (Vergleichsbeispiel)

Granuliertes Saatgut wird entsprechend Beispiel 1 hergestellt, wobei die Hüllmasse keine Kieselsäure enthält. Insgesamt werden 301 g Bindemittel und 250 g Hüllmasse eingesetzt.

### Beispiel 7 (Vergleichsbeispiel)

Granuliertes Saatgut wurde entsprechend US 6,156,699 hergestellt. Dazu wurden 300 g Rapssamen in einem Granulator entsprechend Beispiel 1 vorgelegt und mit einer Mischung enthaltend 2,7 Gewichts-% Polyvinylalkohol Mowiol 28-99, 0,3 Gewichts-% Polysaccharide Elcema F150, 66 Gewichts-% Kalkstein Heladol 150, 0,5 Gewichts-% Tensid Silipon RN 6031, 0,1 Gewichts-% Farbstoff Bayferrox 130, 0,1 Gewichts-% Dispergiermittel Break Through DA 646 und 30,3 Gewichts-% Wasser besprüht. Anschließend wurden 10 Gewichts-% SIPERNAT® 22 bezogen auf die Masse an Rapssamen und aufgesprühter Mischung aufgebracht und die Mischung 300 Sekunden lang aufgranuliert. Anschließend wurde das Produkt getrocknet.

### Nachweis der Kieselsäureverteilung in der Hüllschicht

Zum Nachweis der Kieselsäureverteilung in der Hüllschicht wurden die in den Beispielen 1 und 7 erhaltenen Granulate einer rasterelektronischen Untersuchung in Verbindung mit energiedispersiver Röntgenanalyse (EDX) unterzogen.

Hierzu wurden folgende Geräte verwendet: Mikroskop Fa. Jeol von Typ JSM-7600F, EDX-System der Fa. Oxford Instruments INCA Energy 400 mit einem SiLi Detektor PentaFETx3 (Auflösung 133 eV).

Die Proben wurden in ein Epoxydharz eingebettet, metallurgisch angeschliffen und danach elektrisch kontaktiert. Die Aufnahmen erfolgten bei 20 KV Beschleunigungsspannung und einem Arbeitsabstand von 15mm. Der Strahlstrom des Primärelektronenstrahls lag im Bereich von ca. 500 pA.

Unter diesen Bedingungen wurde ein repräsentativer Bereich der Probe ausgewählt und der Probenausschnitt zunächst durch eine Materialkontrastaufnahme abgebildet. Hierbei werden Dichteunterschiede der Probe sichtbar, es kann aber noch keine Elementaussage getroffen werden. Hierzu wurde der Bereich durch das EDX-System über einen Zeitraum von 8h gescannt (EDX-Mapping). Die Totzeit betrug ca. 30%. Aus den erhaltenen ortsaufgelösten Röntgeninformationen wurden elementspezifische Verteilungsbilder erstellt.

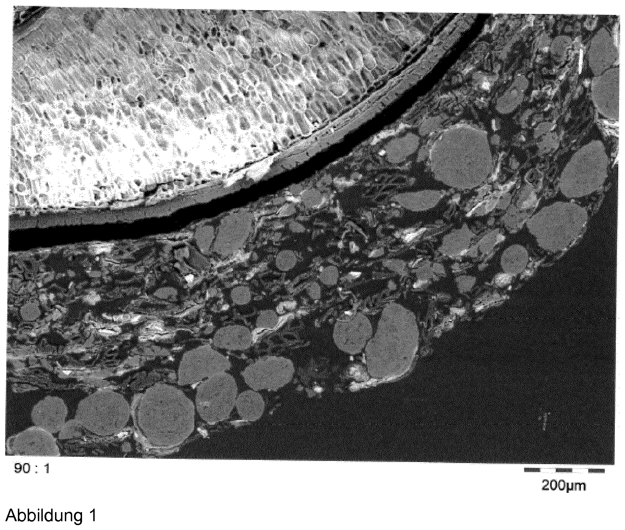

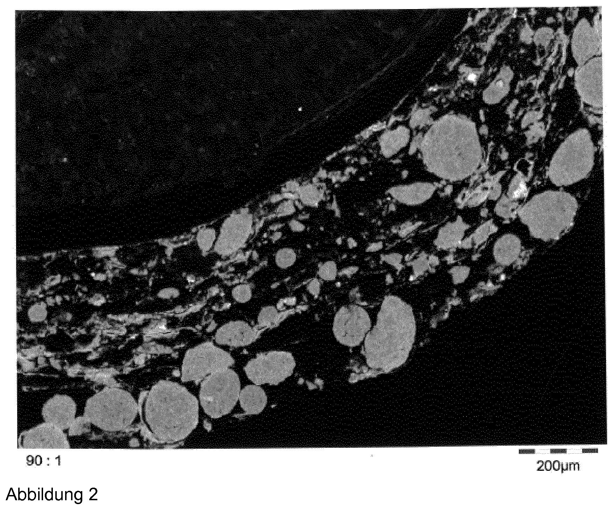

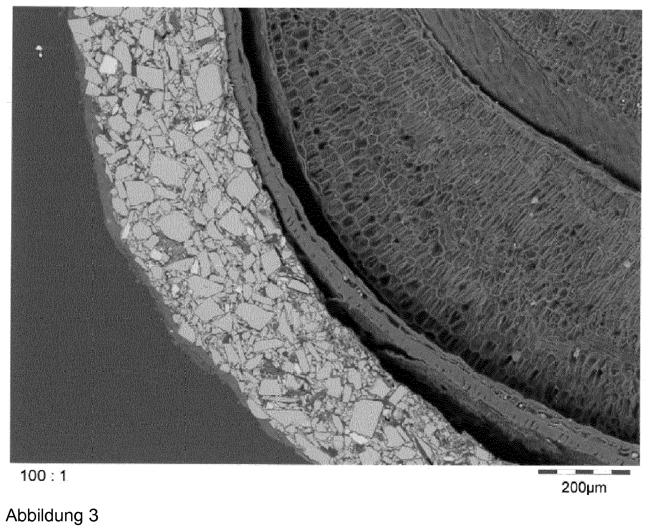

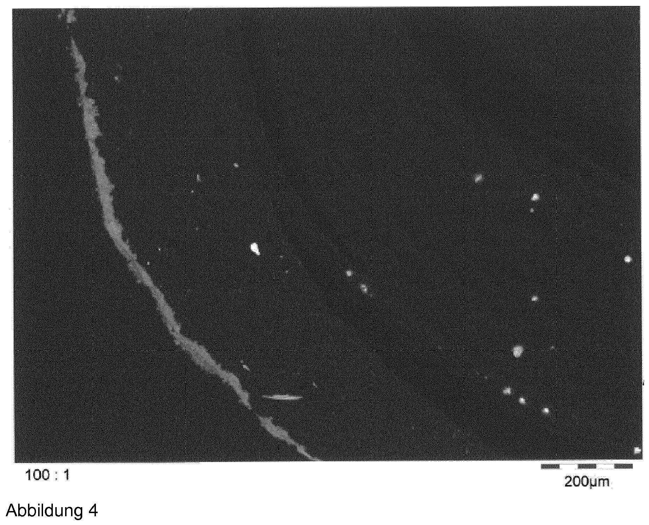

Die Ergebnisse dieser Untersuchungen sind in Abb. 1 bis 4 gezeigt. Abb. 1 zeigt eine Materialkontrast-Aufnahme eines Samens nach Beispiel 1. Abb. 2 zeigt die durch EDX ermittelte Verteilung von Silicium in demselben Samen. Es ist deutlich zu erkennen, dass das Silicium über die gesamte Dicke der Hüllschicht verteilt ist. Abb. 3 zeigt eine Materialkontrast-Aufnahme eines Samens nach Beispiel 7. Abb. 4 zeigt die durch EDX ermittelte Verteilung von Silicium in demselben Samen. Es ist zu erkennen, dass das Silicium in einer im Vergleich zur Gesamtdicke der Hüllschicht relativ dünnen Schicht auf der Oberfläche der Hüllschicht konzentriert ist.

Diese Ergebnisse demonstrieren, dass die Kieselsäure in einem erfindungsgemäßen granulierten Saatgut innerhalb der ganzen Hüllschicht verteilt ist, während dies in einem Saatgut gemäß US 6,156,699 nicht der Fall ist.

Um die Verteilung der Kieselsäure innerhalb der Hüllschicht zu überprüfen, wird die auf der Materialkontrastaufnahme zu erkennende Hüllschicht in eine innere und äußere Schale unterteilt. Dazu werden zunächst zwei Geraden g₁ und g₂ definiert, die jeweils einen Punkt auf dem inneren Rand der Hüllschichtfläche mit dem nächstliegenden Punkt auf dem äußeren Rand der Hüllschicht verbinden und die sich im Bereich der Hüllschicht nicht überschneiden. Die beiden Punkte auf dem inneren Rand der Hüllschicht sind so zu wählen, dass ihr Abstand wenigstens 200 µm beträgt. Anschließend werden die Geraden g₁ und g₂ durch eine Linie l₃ verbunden, wobei die Linie l₃ so verläuft, dass für jeden Punkt der Linie l₃ der Abstand zum nächstliegenden Punkt auf dem inneren Rand der Hüllschicht jeweils gleich dem Abstand zum nächstliegenden Punkt auf dem äußeren Rand der Hüllschicht ist. Das von den Geraden g₁ und g₂ umschlossene Segment der Hüllschicht wird somit durch die Linie l₃ in einen innere und äußeren Bereich unterteilt. Anhand der EDX-Aufnahme wird die mittlere Siliciumkonzentration innerhalb der beiden Bereiche bestimmt, um somit ein Maß für die mittlere Kieselsäurekonzentration in der inneren und äußeren Schale der Hüllschicht zu erhalten.

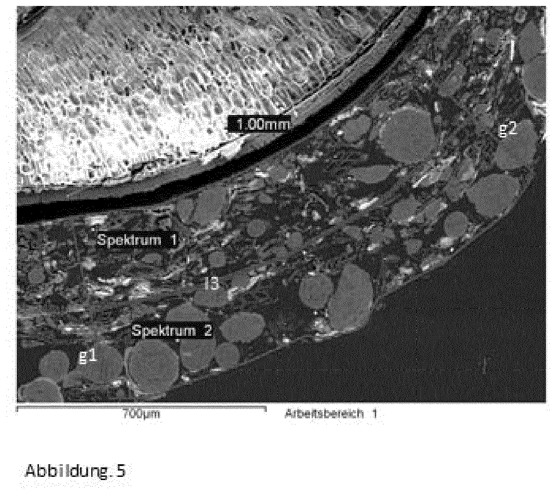

Abbildung 5 zeigt die REM/EDX-Aufnahme von Beispiel 1 in der die Hüllschicht in zwei Hüllschichtflächen unterteilt ist. Zur Silicium-Analyse der Kieselsäure wurde der Silicium-Gehalt des Bentonits in beiden Flächen von der Gesamt-SiliciumKonzentration des Spektums 1 bzw. 2 subtrahiert. Entsprechend weist Spektrum 1 eine Kieselsäurekonzentration von 24,8% und Spektrum 2 eine Kieselsäurekonzentration von 35,2% auf. Der Unterschied in der Kieselsäurekonzentration ist 10,4%.

### Bestimmung der Härte

Die Härte des granulierten Saatguts wird mit einem Messgerät zur Texturanalyse (Texture Analyser TA.XTplus von Stable Micro Systems, Deutschland) durchgeführt. Das Messprinzip besteht darin, mit einem zylindrischen Messelement mit einem Durchmesser von 25 mm auf ein Granulatkorn zu drücken, wobei die Kraft, mit der das Messelement auf das Granulatkorn drückt, zunimmt, bis die Granulathülle bricht. Die dabei gemessene Maximalkraft in kg dient als Maß für die Härte des Granulatkorns. Pro Versuch werden 10 Proben vermessen, um einen Mittelwert zu bilden.

Die für die einzelnen beispielhaften granulierten Saatgutzusammensetzungen bestimmte Härte ist in Tabelle 2 gezeigt.

### Bestimmung der Abriebfestigkeit

Die Abriebfestigkeit des granulierten Saatguts erfolgt mit einem Friabilitätstester (TAR 120 von Erweka, Deutschland). Dabei werden 20 g granuliertes Saatgut in der Trommel des Testinstruments vorgelegt und 5 Minuten bei 40 rpm in der Trommel bewegt. Anschließend wird das Saatgut über einem 800 µm Sieb fraktioniert und das Gewicht der grobkörnigen Fraktion bestimmt. Aus der Differenz zwischen dem Gewicht des vorgelegten Saatguts und dem Gewicht der grobkörnigen Fraktion ergibt sich die durch Abrieb verlorene Masse. Der prozentuale Abrieb bezogen auf das Ausgangsgewicht dient als Maß für die Abriebfestigkeit.

Der für die einzelnen beispielhaften granulierten Saatgutzusammensetzungen bestimmte Abrieb ist in Tabelle 2 gezeigt.

### Bestimmung der Zerfallszeit in Wasser

Die Bestimmung der Zerfallszeit in Wasser des granulierten Saatguts erfolgt in einem Instrument vom Typ ZT 31 (Erweka, Deutschland). Pro Versuch werden zwei Granulatkörner in ein Wasserbad getaucht, das eine konstante Temperatur von 14,8 bis 15,2°C aufweist. Als Maß für die Zerfallszeit dient die Zeit, nach der die Hülle der Granulatkörner sich vollständig vom Samenkorn gelöst hat. Die Messung wird nach maximal 60 Minuten beendet.

Die für die einzelnen beispielhaften granulierten Saatgutzusammensetzungen bestimmte Zerfallszeit in Wasser ist in Tabelle 2 gezeigt.

### Bestimmung der Keimfähigkeit

Zur Bestimmung der Keimfähigkeit des granulierten Saatguts werden pro Versuch 100 Granulatkörner in die Falten eines Faltenpapieres (Hahnemühle, Dassel, plissierte Streifen 110/20 mm, Nr. 3140) platziert. Das Faltenpapier wird in eine Plastikschale (Länge x Breite x Höhe: 170 mm x 125 mm x 60 mm) überführt, welche mit einem dreifach gefalteten Filterpapierstreifen (Hahnemühle, Dassel, Einschlagstreifen 110/580 mm, Nr. 0585) ausgelegt ist. Das Faltenpapier wird mit 35 ml Leitungswasser gleichmäßig befeuchtet. Die Schale wird dicht verschlossen und bei 20°C gelagert. Nach drei Tagen wird der Anteil an gekeimten Samen und an anormalen Keimlingen bestimmt. Als anormale Keimlinge gelten beschädigte Keimlinge, deformierte oder unausgeglichen entwickelte Keimlinge, oder angefaulte Keimlinge. Anormale Keimlinge wurden anhand verkürzter Wurzeln, verformter oder verfärbter Blätter, oder schwarz verfärbter Wurzelspitzen identifiziert. Jede Messung wird viermal wiederholt.

Als Vergleich wird die Keimfähigkeit von reinem Rapssamen (Winterrapssorte Dimension, Tausendkorngewicht 6,3 g) bestimmt.

Die für die einzelnen beispielhaften granulierten Saatgutzusammensetzungen bestimmte Keimfähigkeit ist in Tabelle 3 gezeigt. Die Ergebnisse zeigen, dass mit Hilfe von Kieselsäure granuliertes Saatgut eine höhere Keimfähigkeit nach drei Tagen aufweist als granuliertes Saatgut, das keine Kieselsäure aufweist, und eine ähnlich hohe Keimfähigkeit wie ungranulierter, reiner Rapssamen.

**Tabelle 2: Härte, Abrieb und Zerfallszeit in Wasser einzelner granulierter Saatgutzusammensetzungen.**

| **Beispiel** | **Härte (kg)** | **Abrieb (%)** | **Zerfallszeit (min)** |
|---|---|---|---|
| 1 | 1,848 | 2,88 | > 60 |
| 2 | 1,491 | 2,83 | > 60 |
| 3 | 1,573 | 1,9 | > 60 |
| 4 | 1,47 | 2,05 | > 60 |
| 5 | 1,947 | 1,38 | > 60 |
| 6 | 1,967 | 1,63 | > 60 |
| 7 | 1.43 | 3.1 | > 60 |

**Tabelle 3: Keimfähigkeit einzelner granulierter Saatgutzusammensetzungen.**

| **Beispiel** | **Keimfähigkeit nach 3 Tagen (%)** | **Anormale Keimlinge (%)** |
|---|---|---|
| 1 | 86,5 | 3,25 |
| 2 | 84,25 | 3,5 |
| 3 | 82,25 | 5 |
| 4 | 80,25 | 3,25 |
| 5 | 80,5 | 4,75 |
| 6 Vergleichsbeispiel | 77 | 5,25 |
| Reiner Rapssamen | 85,75 | 3 |
| 7 Vergleichsbeispiel | 78 | 6.3 |

## Patentansprüche

1. Verfahren zur Herstellung von granuliertem Saatgut umfassend mit einer Hüllschicht beschichtete Samenkörner, wobei das Verfahren folgende Schritte umfasst:
a) Bereitstellen von Samenkörnern;
b) Aufbringen eines Bindemittels auf die Samenkörner unter Erhalt von mit Bindemittel beschichteten Samenkörnern;
c) Aufbringen einer Hüllmasse umfassend Kieselsäure auf die mit Bindemittel beschichteten Samenkörner unter Erhalt von mit einer Hüllschicht beschichteten Samenkörnern, **dadurch gekennzeichnet, dass** die Kieselsäure eine gefällte oder pyrogene Kieselsäure ist und eine BET-Oberfläche gemäß ISO 9277 von 20 bis 400 m²/g und eine Partikelgröße d50 gemäß ISO 13302-1 von 5 bis 130 µm und ein Porenmaximum gemäß DIN 66134 von 30 bis 60 nm aufweist und der oder den aufzubringenden Hüllmassen so viel Kieselsäure zugesetzt werden, dass die Hüllschicht 10 bis 70 Gewichts-% Kieselsäure umfasst.

2. Verfahren nach Anspruch 1, wobei die Schrittfolge b) und/oder c) beliebig oft wiederholt wird, wobei sich die Zusammensetzung des Bindemittels und/oder der Hüllmasse jeweils von der in den vorhergehenden Schritten verwendeten Zusammensetzung unterscheiden kann.

3. Verfahren nach einem der Ansprüche 1 bis 2, wobei wenigstens einer der aufzubringenden Hüllmassen ein oder mehrere hygroskopische Salze in einer Menge zugesetzt werden, dass die Hüllschicht 0,1 bis 15 Gewichts-%, bevorzugt 0,2 bis 10 Gewichts-% hygroskopische Salze umfasst.

4. Verfahren nach Anspruch 3, wobei das oder die hygroskopischen Salze ausgewählt sind aus Magnesiumchlorid, Magnesiumnitrat, Magnesiumsulfat, Ammoniumchlorid, Ammoniumsulfat, Kaliumchlorid, Zinksulfat, Kaliumnitrat, Ammoniumdihydrogensulfat, Natriumdihydrogensulfat, Kaliumsulfat, Natriumnitrat, Calciumchlorid oder eine beliebige Mischung daraus.

5. Verfahren nach einem der Ansprüche 1 bis 4, wobei das Bindemittel Polyvinylalkohol, Polycarboxylate, Polyacrylsäure, Polysaccharide, Cellulose, Cellulosederivate, Carboxymethylcellulose, Acryldispersionen, Polymethacrylate, Polyvinylacetat, Polyethylenoxid, Alkylacrylate, Gelatine, Stärke, Alginate, Casein, Melasse, Pektin oder beliebige Mischungen daraus umfasst.

6. Verfahren nach einem der Ansprüche 1 bis 5, wobei das granulierte Saatgut nach Schritt c) bei einer Temperatur von 25 bis zu 50°C, bevorzugt von 35 bis zu 45°C getrocknet wird.

7. Granuliertes Saatgut umfassend mit einer Hüllschicht beschichtete Samenkörner, **dadurch gekennzeichnet, dass** die Hüllschicht Kieselsäure umfasst und die Kieselsäure innerhalb der ganzen Hüllschicht verteilt ist, wobei die Kieselsäure eine gefällte oder pyrogene Kieselsäure ist und eine BET-Oberfläche gemäß ISO 9277 von 20 bis 400 m²/g und eine Partikelgröße d50 gemäß ISO 13302-1 von 5 bis 130 µm und ein Porenmaximum gemäß DIN 66134 von 30 bis 60 nm aufweist und die Hüllschicht 10 bis 70 Gewichts-% Kieselsäure umfasst.

8. Granuliertes Saatgut nach Anspruch 7, wobei die Hüllschicht zusätzlich ein hygroskopisches Salz umfasst.

9. Granuliertes Saatgut nach einem der Ansprüche 7 bis 8, wobei die Hüllschicht Polyvinylalkohol, Polycarboxylate, Polyacrylsäure, Polysaccharide, Cellulose, Cellulosederivate, Carboxymethylcellulose, Acryldispersionen, Polymethacrylate, Polyvinylacetat, Polyethylenoxid, Alkylacrylate, Gelatine, Stärke, Alginate, Casein, Melasse, Pektin oder beliebige Mischungen daraus als Bindemittel umfasst.

10. Granuliertes Saatgut nach einem der Ansprüche 7 bis 9, wobei die Samenkörner eine Größe von 0,3 bis 10 mm aufweisen.

## Claims

1. Process for the production of granulated seed comprising seed kernels coated with a coating layer, the process comprising the following steps:
a) providing seed kernels,
b) applying a binder to the seed kernels, giving rise to seed kernels coated with a binder,
c) applying a coating composition comprising silica to the seed kernels coated with binder, giving rise to seed kernels coated with a coating layer, **characterized in that** the silica is a fumed or precipitated silica and has a BET surface area in accordance with ISO 9277 of from 20 to 400 m²/g and a d50 particle size according to ISO 13302-1 of from 5 to 130 µm and a pore maximum according to DIN 66134 of from 30 to 60 nm, and such an amount of silica is added to the coating composition(s) to be applied that the coating layer comprises 10 to 70% by weight of silica.

2. Process according to Claim 1, wherein the sequence of steps b) and/or c) is repeated as often as desired, wherein the composition of the binder and/or the coating composition may in each case be different from the composition used in the previous steps.

3. Process according to one of Claims 1 and 2, wherein one or more hygroscopic salts are added to at least one of the coating compositions to be applied in such an amount that the coating layer comprises 0.1 to 15% by weight, preferably 0.2 to 10% by weight, of hygroscopic salts.

4. Process according to Claim 3, wherein the hygroscopic salt(s) is/are selected from magnesium chloride, magnesium nitrate, magnesium sulfate, ammonium chloride, ammonium sulfate, potassium chloride, zinc sulfate, potassium nitrate, ammonium dihydrogensulfate, sodium dihydrogensulfate, potassium sulfate, sodium nitrate, calcium chloride or any mixture of these.

5. Process according to one of Claims 1 to 4, wherein the binder comprises polyvinyl alcohol, polycarboxylates, polyacrylic acid, polysaccharides, cellulose, cellulose derivatives, carboxymethylcellulose, acrylic dispersions, polymethacrylates, polyvinyl acetate, polyethylene oxide, alkyl acrylates, gelatin, starch, alginates, casein, molasses, pectin or any mixtures of these.

6. Process according to one of Claims 1 to 5, wherein the granulated seed after step c) is dried at a temperature of from 25 up to 50°C, preferably from 35 up to 45°C.

7. Granulated seed comprising seed kernels coated with a coating layer, **characterized in that** the coating layer comprises silica and that the silica is distributed within the entire coating layer, wherein the silica is a fumed or precipitated silica and has a BET surface area in accordance with ISO 9277 of from 20 to 400 m²/g and a d50 particle size according to ISO 13302-1 of from 5 to 130 µm and a pore maximum according to DIN 66134 of from 30 to 60 nm, and the coating layer comprises 10 to 70% by weight of silica.

8. Granulated seed according to Claim 7, wherein the coating layer additionally comprises a hygroscopic salt.

9. Granulated seed according to one of Claims 7 and 8, wherein the coating layer comprises, as binder, polyvinyl alcohol, polycarboxylates, polyacrylic acid, polysaccharides, cellulose, cellulose derivatives, carboxymethylcellulose, acrylic dispersions, polymethacrylates, polyvinyl acetate, polyethylene oxide, alkyl acrylates, gelatine, starch, alginates, casein, molasses, pectin or any mixtures of these.

10. Granulated seed according to one of Claims 7 to 9, wherein the seed kernels have a size of from 0.3 to 10 mm.

## Revendications

1. Procédé de fabrication de semences granulées comprenant des graines revêtues avec une couche d'enrobage, le procédé comprenant les étapes suivantes :
a) la préparation de graines ;
b) l'application d'un liant sur les graines pour obtenir des graines revêtues avec un liant ;
c) l'application d'un matériau d'enrobage comprenant de la silice sur les graines revêtues avec un liant pour obtenir des graines revêtues avec une couche d'enrobage, **caractérisé en ce que** la silice est une silice précipitée ou pyrogénée, et présente une surface BET selon ISO 9277 de 20 à 400 m²/g et une taille de particule d50 selon ISO 13302-1 de 5 à 130 µm et une taille de pores maximale selon DIN 66134 de 30 à 60 nm, et suffisamment de silice est ajoutée au ou aux matériaux d'enrobage à appliquer pour que la couche d'enrobage comprenne 10 à 70 % en poids de silice.

2. Procédé selon la revendication 1, dans lequel la succession d'étapes b) et/ou c) est répétée un nombre quelconque de fois, la composition du liant et/ou du matériau d'enrobage pouvant à chaque fois différer de la composition utilisée dans les étapes précédentes.

3. Procédé selon l'une quelconque des revendications 1 à 2, dans lequel un ou plusieurs sels hygroscopiques sont ajoutés à au moins un des matériaux d'enrobage à appliquer en une quantité telle que la couche d'enrobage comprenne 0,1 à 15 % en poids, de préférence 0,2 à 10 % en poids, de sels hygroscopiques.

4. Procédé selon la revendication 3, dans lequel le ou les sels hygroscopiques sont choisis parmi le chlorure de magnésium, le nitrate de magnésium, le sulfate de magnésium, le chlorure d'ammonium, le sulfate d'ammonium, le chlorure de potassium, le sulfate de zinc, le nitrate de potassium, le dihydrogénosulfate d'ammonium, le dihydrogénosulfate de sodium, le sulfate de potassium, le nitrate de sodium, le chlorure de calcium ou un mélange quelconque de ceux-ci.

5. Procédé selon l'une quelconque des revendications 1 à 4, dans lequel le liant comprend de l'alcool polyvinylique, des polycarboxylates, de l'acide polyacrylique, des polysaccharides, de la cellulose, des dérivés de cellulose, de la carboxyméthylcellulose, des dispersions acryliques, des polyméthacrylates, du polyacétate de vinyle, du polyoxyde d'éthylène, des acrylates d'alkyle, des gélatines, de l'amidon, des alginates, de la caséine, de la mélasse, de la pectine ou des mélanges quelconques de ceux-ci.

6. Procédé selon l'une quelconque des revendications 1 à 5, dans lequel les semences granulées sont séchées après l'étape c) à une température de 25 à 50 °C, de préférence de 35 à 45 °C.

7. Semences granulées, comprenant des graines revêtues avec une couche d'enrobage, **caractérisées en ce que** la couche d'enrobage comprend de la silice et la silice est répartie dans l'ensemble de la couche d'enrobage, la silice étant une silice précipitée ou pyrogénée, et présentant une surface BET selon ISO 9277 de 20 à 400 m²/g et une taille de particule d50 selon ISO 13302-1 de 5 à 130 µm et une taille de pores maximale selon DIN 66134 de 30 à 60 nm, et la couche d'enrobage comprenant 10 à 70 % en poids de silice.

8. Semences granulées selon la revendication 7, dans lesquelles la couche d'enrobage comprend en outre un sel hygroscopique.

9. Semences granulées selon l'une quelconque des revendications 7 à 8, dans lesquelles la couche d'enrobage comprend de l'alcool polyvinylique, des polycarboxylates, de l'acide polyacrylique, des polysaccharides, de la cellulose, des dérivés de cellulose, de la carboxyméthylcellulose, des dispersions acryliques, des polyméthacrylates, du polyacétate de vinyle, du polyoxyde d'éthylène, des acrylates d'alkyle, des gélatines, de l'amidon, des alginates, de la caséine, de la mélasse, de la pectine ou des mélanges quelconques de ceux-ci en tant que liant.

10. Semences granulées selon l'une quelconque des revendications 7 à 9, dans lesquelles les graines présentent une taille de 0,3 à 10 mm.
